# EUROPEAN PATENT SPECIFICATION

(11) **EP 2 874 744 B1**
(45) Date of publication and mention of the grant of the patent: **14.06.2023**
(21) Application number: 13823729.2
(22) Date of filing: 23.07.2013
(51) Int. Cl.: B01J 29/06, C10G 11/18, B01J 37/06, B01J 29/08, C10G 11/05, C10G 11/08, B01J 29/80, B01J 29/90, B01J 37/02

(54) **Method to prepare MAGNESIUM STABILIZED ULTRA LOW SODA CRACKING CATALYSTS**
Methode zur Herstellung von MAGNESIUMSTABILISIERTE KRACKKATALYSATOREN MIT SEHR NIEDRIGEN SODAGEHALT
Procédé de preparation de CATALYSEURS DE CRAQUAGE À très FAIBLE TENEUR EN SOUDE STABILISÉS PAR DU MAGNÉSIUM

(30) Priority: 23.07.2012 US 201261674527 P
(43) Date of publication of application: 27.05.2015
(73) Proprietor: W.R. Grace & CO. - CONN., Columbia, MD 21044 (US)
(72) Inventor: SHU, Yuying, Ellicott City, Maryland 21043 (US); CHENG, Wu-Cheng, Ellicott City, Maryland 21042 (US); WORMSBECHER, Richard F., Dayton, Maryland 21036 (US); SUTOVICH, Kevin J., Hampstead, Maryland 21074 (US); KUMAR, Ranjit, Clarksville, Maryland 21029 (US); ZIEBARTH, Michael S., Columbia, Maryland 21044 (US)
(74) Representative: J A Kemp LLP
(86) International application number: PCT/US2013/051581
(87) International publication number: WO 2014/018484

(56) References cited:
- EP-A1- 0 313 167
- WO-A1-2011/115745
- WO-A1-2013/005225
- CA-A- 1 194 465
- US-A- 4 242 237
- US-A- 4 308 129
- US-A1- 2009 057 199
- US-A1- 2010 152 024
- US-A1- 2011 120 911
- US-B2- 8 084 383

## Description

This application claims the benefit of the filing date of United States Provisional Patent Application No. 61/674,527 filed July 23, 2012,

### FIELD OF THE INVENTION

The present invention relates to a method of preparing magnesium containing catalytic cracking catalysts having high catalytic activity and good selectivity for coke and hydrogen,

### BACKGROUND OF THE INVENTION

Catalytic cracking is a petroleum refining process that is applied commercially on a very large scale. A majority of the refinery petroleum products are produced using the fluid catalytic cracking (FCC) process. An FCC process typically involves the cracking of heavy hydrocarbon feedstocks to lighter products by contacting the feedstock in a cyclic catalyst recirculation cracking process with a circulating fluidizable catalytic cracking catalyst inventory consisting of particles having a mean particle size ranging from about 50 to about 150 µm, preferably from about 50 to about 100 µm.

The catalytic cracking occurs when relatively high molecular weight hydrocarbon feedstocks are converted into lighter products by reactions taking place at elevated temperature in the presence of a catalyst, with the majority of the conversion or cracking occurring in the vapor phase. The feedstock is converted into gasoline, distillate and other liquid cracking products as well as lighter gaseous vaporous cracking products of four or less carbon atoms per molecule. The vapor partly consists of olefins and partly of saturated hydrocarbons. The products also include bottoms and coke deposited on the catalyst. It is desirable to produce the lowest bottoms at a constant coke level.

FCC catalysts normally consist of a range of extremely small spherical particles. Commercial grades normally have average particle sizes ranging from about 45 to 200 µm, preferably from about 55 to about 150 µm. FCC catalysts are generally composed of zeolite, matrix, clay and binder. The cracking catalysts may be comprised of a number of components incorporated into a single particle or blends of individual components having different functions.

Rare earth metals have been widely used as a component of FCC catalyst to provide catalysts having enhanced activity and hydrothermal zeolite stability with increased yield performance. The level of rare earth metals in a specific catalyst formulation is determined by operational severity and product objectives. However, as the need for increased amounts of gasoline grew over time, refiners tended to increase the level of rare earths in their catalyst formulation. The amount of rare earth metal typically used in the FCC catalyst ranges from about 0.5 to about 6 wt% of the total FCC catalyst formulation.

Recently, China, which produces 95% of the world's supply of rare earth metals, has severely cut its export of precious rare earth metals, causing a troubling increase in catalyst costs. The refining industry has instinctively reacted by opting for lower rare earth catalyst formulations to offset costs of the raw materials. Such action offers immediate and successful costs savings. However, reduced rare earth levels can have a significant impact on catalyst performance, e.g. in reduced catalyst activity, stability and yields, thereby affecting bottom-line profits generation. EP0313167A1 discloses a method to prepare a FCC catalyst in which a slurry comprising zeolite USY, silica sol, kaolin, and an alumina-magnesia hydrogel is spray-dried.

There exists a need in the FCC refining industry for methods to prepare rare earth free catalytic cracking catalysts that provide a catalytic activity and selectivity comparable to or improved over conventional rare earth containing FCC catalysts during a catalytic cracking process.

### SUMMARY OF THE INVENTION

The invention is defined in the appended claims.

The present invention encompasses the discovery that a combination of a magnesium salt and an ultra low soda content in certain catalytic cracking catalyst compositions, in particularly FCC catalyst compositions, are very effective to provide compositions having increased catalytic activity and improved coke and hydrogen selectivity without the need to incorporate rare earth metals. Catalytic cracking catalysts prepared according to the method of the invention advantageously offers increased cost savings while providing enhanced catalyst activity and selectivity comparable to catalyst activity and selectivity obtainable using conventional rare earth containing zeolite based FCC catalysts.

Catalyst compositions prepared in accordance with the present invention comprise at least one zeolite component having catalytic cracking activity under FCC conditions, a magnesium salt, clay, binder and optionally, a matrix material.

In accordance with the present invention, the catalyst compositions of the invention are prepared by a process comprising spray drying aqueous slurry comprising at least one zeolite component having catalytic cracking activity, clay, a binder and optionally, a matrix material in an amount sufficient to provide final catalyst particles having a DI of less than 30 and a ultra low Na₂O content. The spray-dried catalyst particles may optionally be calcined and optionally washed with an aqueous solution to reduce the content of Na₂O and other salts. The catalyst particles are treated with an aqueous solution of a magnesium salt in an amount sufficient to provide the desired amount of magnesium salt throughout the pore volume of the final catalyst particles, as defined in appended claim 1.

Provided are magnesium salt stabilized ultra low soda FCC catalyst compositions which are free of rare earth metals and have high activity and hydrothermal stability during a FCC process.

Provided are magnesium salt stabilized, ultra low soda zeolite containing FCC catalyst compositions which exhibit a high catalytic activity and good coke and hydrogen selectivity during a FCC process.

It is an object of the present invention to provide a process for preparing magnesium stabilized, ultra low soda FCC catalysts

These and other aspects of the present invention are described in further details below.

### DETAILED DESCRIPTION OF THE INVENTION

For purposes of this invention the terms "rare earth" and "rare earth metal" are used herein interchangeably to designate metals of the Lanthanide Series of The Periodic Table, and yttrium.

The phrase "low soda" as used herein relates to the amount of Na₂O in the catalyst composition and is used to indicate an amount ranging from 0.7 wt% to about 1.2 wt% Na₂O, on a zeolite basis, in the total catalyst composition.

The phrase "ultra low soda" relates to an amount of Na₂O in the catalyst composition and is used herein to indicate an amount of less than 0.7 wt% Na₂O, on a zeolite basis, in the total catalyst composition.

The term "free" as it relates to an amount of rare earth or rare earth metal used herein, is used to indicate less than 0.3 wt% of rare earth or rare earth metal, measured as the oxide, based on the total weight of the composition.

The phrase "catalytic cracking activity" is used herein to indicate the ability of a compound to catalyze the conversion of hydrocarbons to lower molecular weight compounds under catalytic cracking conditions.

The phrase "catalytic cracking conditions" is used herein to indicate the conditions of a catalytic cracking process, in particularly an FCC process wherein a circulating inventory of cracking catalyst is contacted with a heavy hydrocarbon feedstock at elevated temperature, e.g. a temperature ranging from about 480°C to about 700°C, to convert the feedstock into lower molecular weight compounds.

Catalyst compositions prepared according to the invention comprise particulate compositions comprising at least one zeolite component having catalytic cracking activity under FCC conditions, clay, an inorganic binder and optionally, a matrix material. The particulate catalyst compositions have been treated with magnesium salt, expressed as the oxide, to give a final catalytic cracking catalyst.

The zeolite component used to prepare the particulate compositions is a zeolite faujasite which has catalytic cracking activity under fluid catalytic cracking conditions and which is free or substantially free of rare earth metal containing compounds. The zeolite component will have a Na₂O content sufficient to provide less than 0.7 wt%, preferably less than about 0.5 wt%, most preferably less than about 0.3 wt% Na₂O, on a zeolite basis, in the total catalyst composition.

For purposes of the present invention, the term "on a zeolite basis" assumes that all of the soda in the catalyst is associated with or on the zeolite. Accordingly, a catalyst containing 0.30 wt% Na₂O and 30 wt% zeolite, for example, will be expressed as 1.0 wt% Na₂O on a zeolite basis.

The desired Na₂O content on the zeolite may be provided on the initial zeolite used in the catalyst formation slurry during catalyst preparation. Alternatively, the desired Na₂O content in the catalyst may be provided following catalyst preparation wherein formed catalyst particles are treated to remove sodium ions to provide the desired ultra low soda content. In a preferred embodiment the catalyst particles are treated with an aqueous wash solution containing ammonia and/or salts of ammonia to remove sodium ions.

The zeolitic component is a synthetic faujasite zeolite. In a preferred embodiment of the invention, the zeolite component is Y-type zeolite, such as USY. It is also contemplated that the zeolite component may comprise a mixture of zeolites such as synthetic faujasite in combination with mordenite and the ZSM type zeolites. In one embodiment the zeolite utilized in the method of the invention is a clay derived zeolite wherein the clay and zeolite components are in the same particle. Clay derived zeolites useful in the present invention are typically those produced by treating clay with a silica source under alkaline conditions. Methods for making such zeolites are known and described in Column 8, line 56 through Column 9, line 7 of US Patent 3,459,680 (hereinafter the '680 Patent), Other methods for making zeolite from clay are also disclosed in US Patents 4,493,902 and 6,656,347, These methods are described in more detail below.

Generally, the zeolite component comprises from about 10 wt% to about 75 wt% of the cracking catalyst. In one embodiment the zeolite component comprises from about 12 wt% to about 55 wt% of the catalyst composition. In another embodiment the zeolite component comprise from about 15 wt% to about 45 wt% of the catalyst composition.

Binder materials used to prepare the particulate compositions are inorganic binders which are capable of binding a zeolite powder to form particles having properties suitable for use in an FCC unit under FCC process conditions. Inorganic binder materials used in accordance with the present invention are selected from silica sol, peptized alumina, and mixtures thereof. In a more preferred embodiment of the invention, the binder comprises an acid or base peptized alumina.

Generally, the amount of binder material present in the particulate catalyst compositions comprises from about 10 wt% to about 60 wt%, preferably from about 12 wt% to about 50 wt%, most preferably from about 15 wt% to about 40 wt%, based on the total weight of the catalyst composition.

The catalyst further includes a clay component. While kaolin is the preferred clay component, it is also contemplated that other clays, such as modified kaolin (e.g. metakaolin) may be optionally included in the catalyst. The clay component will typically comprise from about 5 wt% to about 65 wt% of the total weight of the catalyst composition. In a preferred embodiment of the invention, the amount of the clay component ranges from about 25 wt% to about 55 wt% of the total weight of the catalyst composition.

Catalyst compositions may optionally comprise at least one or more matrix material. Suitable matrix materials are selected from the group consisting of silica, alumina, silica-alumina, zirconia, titania, and combinations thereof. In a preferred embodiment, the matrix material is alumina. The matrix material may be present in the catalyst in an amount ranging from about 1 wt% to about 70 wt% of the total catalyst composition. In one embodiment of the invention, the matrix material comprises from about 5 wt% to about 50 wt% of the total catalyst composition.

The particle size and attrition properties of the catalyst affect fluidization properties in the catalytic cracking unit and determine how well the catalyst is retained in the commercial unit, especially in an FCC unit. The catalyst composition prepared according to the invention typically has a mean particle size of about 45 µm to about 200 µm. In another embodiment of the invention, the catalyst composition has a mean particle size of about 55 µm to about 150 µm.

Catalyst compositions prepared in accordance with the present invention have good attrition properties as indicated by a Davison Index (DI) of less than 30. In a preferred embodiment the catalyst compositions prepared in accordance with the invention have a DI of less than 20. In a more preferred embodiment of the invention, the catalyst compositions have a DI of less than 15.

Catalyst compositions are prepared by forming a homogeneous or substantially homogeneous aqueous slurry which is hereinafter referred to and the "catalyst formation slurry" and which contains a catalytically active zeolite component, an inorganic binder, clay, and optionally, at least one matrix material, in an amount sufficient to provide a final catalyst composition which comprises about 10 to about 75 wt% of the catalytically active zeolite component, about 10 wt% to about 60 wt% of binder, from about 5 wt% to about 65 wt% of clay, and optionally, about 1 wt% to 70 wt% of matrix material, said weight percentages being based on the total catalyst composition. In a preferred embodiment of the invention, the catalyst formation slurry is milled to obtain a homogeneous or substantially homogeneous slurry, i.e. a slurry wherein all the solid components of the slurry have an average particle size of less than 10 µm. Alternatively, the components forming the slurry may be milled prior to forming the slurry. The catalyst formation slurry is thereafter mixed to obtain a homogeneous or substantially homogeneous aqueous slurry.

The formation slurry is thereafter subjected to a spray drying step using conventional spray drying techniques to form spray-dried catalyst particles. Following spray drying, the catalyst particles may be optionally calcined at a temperature and for a time sufficient to remove volatiles. Where calcined, the catalyst particles may be calcined at a temperature ranging from about 150°C to about 800°C for a period of about 10 minutes to about 2 hours. In one embodiment of the invention, the catalyst particles are calcined at a temperature of about 300°C for about 650°C for about 15 minutes to about 1 hour.

The catalyst particles may be optionally washed in an aqueous solution prior to treatment with magnesium to reduce ions, i.e. sodium and sulfates ions. In a preferred embodiment of the invention, the aqueous wash solution contains ammonia and/or salts of ammonia.

As mentioned earlier, it is also with the scope of the invention to form catalyst compositions in accordance with the invention using a clay derived zeolite. In this embodiment, the clay derived zeolite may be prepared by contacting the selected clay with a source of silica, such as silica gel, colloidal silica, precipitated silica, rice hull ash, sodium silicate, and/or mixtures thereof, wherein the clay and silica source are contacted or treated under alkaline conditions to crystallize the zeolite, followed by ion-exchange in one or more steps to remove the sodium and optionally introduce metal cations, and calcination at a temperature in the range of about 350°C to about 850°C to ultra-stabilize the zeolite. The calcined material can then be further processed. Milling the calcined material to a particle size in the range of 0.01 to 10 microns is particularly suitable when preparing the catalyst in accordance with the `680 Patent. In this embodiment, the zeolite will be combined suitable binders, and matrix precursors to form a particulate suitable for use in FCC. Particulates made in this fashion commonly have an average particle size in the range of 20 to 150 microns.

A seed is optionally combined with the silica source and clay. Seeds are also known as zeolite initiators. Briefly, a seed is used to initiate crystallization of the zeolite from the aforementioned components, and can include, and "seed" is herein defined as, any material containing silica and alumina that either allows a zeolite crystallization process that would not occur in the absence of the initiator, or shortens significantly the crystallization process that would occur in its absence. Typical seeds have an average particle size less than a micron, and the seed may or may not exhibit detectable crystallinity by x-ray diffraction. Such seeds are known in the art, and can come for a variety of sources, e.g., recycled fines from a prior crystallization process, or sodium silicate solutions. See US Patent 4,493,902.

The zeolites prepared in this fashion can have a pore structure with an opening in the range of 4 to 15 Angstroms, but preferably having a pore size of at least 7 Angstroms.

Alternatively, the zeolite is produced from clay that has already been formed in particulate suitable for use in a hydrocarbon conversion process, e.g., having an average particle size in the range of 20 to 150 microns. The clay particulate would then be contacted with the source of silica and under alkaline conditions to form zeolite on the surface of and within the particulate. This embodiment is also referred to herein as forming zeolite in situ within the clay particulate. This method of preparing the clay derived zeolite and catalysts prepared therefrom are discussed in more detail below.

One embodiment utilizes zeolite prepared in accordance with US Patent 4,493,902 (hereinafter the `902 Patent). See methods disclosed in Column 8 of the `902 Patent. Briefly, kaolin clay can be calcined through its characteristic transition phases, with the calcination temperature dictating which phase transition product is produced. In one embodiment, the clay is calcined at a temperature in the range of about 985°C to about 1100°C to produce spinel (but not mullite), or the kaolin can be calcined to temperatures above 1100°C to produce mullite. The calcined product from either calcination can be milled or further processed to facilitate combination with additional clay. For example, either one or both types of calcined clays can be combined with kaolin for further processing, e.g., combining kaolin and its calcination product(s) in an aqueous slurry and spray drying the clays into particulates having an average particle size in the range of 20 to 150 microns. The particles are formed using conventional spray drying techniques.

The formed particulates are then calcined at a temperature in the range of about 480 to about 985°C. The calcination converts the kaolin into metakaolin, thereby resulting in a particulate comprising metakaolin and one or both of spinel and/or mullite kaolin phase transitions added in the initial slurry. Calcined particulates suitable for this invention therefore include those particulates comprising 20 to 60% by weight metakaolin and 40 to75% clay calcined to one or more of its characteristic phase transitions, e.g., calcined product comprising spinel, mullite and/or mixtures thereof.

Other embodiments of this invention include forming separate particulates of kaolin and separate particulates of calcined kaolin, mixing the separate particulates and then calcining the mixture of particulates to form a composition having 20 to 60% by weight metakaolin and 40 to 75% calcined clay comprising spinel, mullite or mixtures thereof.

Zeolite can be formed with the clay particulate by treating the particulate with source of silica and under alkaline conditions, optionally including seeds as described above. The treatment is typically conducted in aqueous slurry. The treatment typically comprises heating the particulates and source of silica to a temperature and for a time to produce particulates comprising zeolite, e.g., zeolite Y, in amounts of at least 30 wt%, and typically in the range of 50 to 70 wt% zeolite. The heating temperature can be in the range of 82 to 110°C, and heating conducted for 10 to 120 hours.

Another embodiment comprises using clay particulates prepared in accordance with US Patent 6,656,347. Briefly, the clay is processed into a zeolite containing particulate comprising macroporous matrix and crystallized zeolite coating the walls of the matrix pores.

Clay derived zeolites produced as described hereinabove can be, and are typically, further processed to provide a sufficiently reduced Na₂O content such that the final catalyst prepared therefrom will have an ultralow Na₂O content, e.g. less than about 0.7 wt%, preferably less than about 0.5 wt%, most preferably less than about 0.3 wt% Na₂O, on a zeolite basis, in the total catalyst composition. Further processing includes washing the zeolite in an aqueous wash solution as described herein above to remove impurities, e.g., sodium compounds or "soda".

The clay derived zeolite is thereafter combined in an aqueous solution with binders and optional matrix materials to prepare the catalyst formation slurry. The slurry is thereafter spray dried to form catalyst particles. The spray dried catalyst particles may be optionally calcined at a temperature and for a time sufficient to remove volatiles. Where calcined, the catalyst particles may be calcined at a temperature ranging from about 150°C to about 800°C for a period of about 10 minutes to about 2 hours.

Whether obtained from a typical zeolite, such as, for example, a synthetic faujasite zeolite, or a clay derived zeolite, the zeolite containing catalyst particles are thereafter treated with a magnesium salt in any manner sufficient to distribute magnesium salt throughout the catalyst particles. Magnesium salts useful in the present invention include any soluble magnesium salt which is capable of forming a solution in an appropriate solvent which may be removed readily in a subsequent drying step. In the invention, the solvent is water and the magnesium salt is a water-soluble magnesium salt which includes, but is not limited to, acetates, nitrates, sulfates, chlorides or combinations thereof. In a more preferred embodiment of the invention, the magnesium salt is magnesium sulfate.

Treatment of the catalyst particles is accomplished by contacting the catalyst particles with an aqueous solution comprising at least one soluble magnesium salt. For example, treatment of the particles may be performed by contacting the catalyst particles with an aqueous solution of magnesium salt in an amount sufficient to completely wet the particles and distribute magnesium oxide over the surface and into the pores of the catalyst particles. In a preferred embodiment of the invention, an aqueous magnesium salt containing solution is contacted with the catalyst particles in a manner sufficient to fill or substantially fill (i.e. at least 90%) the pores of the particles. In embodiment more preferred embodiment of the invention, magnesium oxide is distributed uniformly throughout the catalyst particles and pores thereof using impregnation.

The amount of magnesium salt in the aqueous solution will vary depending upon the amount of magnesium oxide desired on the final catalyst composition. The amount of magnesium in the aqueous solution will be an amount sufficient to provide from 0.5 wt% to 3.0 wt%, based on the total weight of the final catalyst, of magnesium oxide. In an embodiment of the invention, the amount of magnesium salt in the aqueous solution will be an amount sufficient to provide from about 0.8 wt% to about 2.0 wt%, based on the total weight of the final catalyst, of magnesium oxide.

At this point, the magnesium salt containing particles may be optionally washed in an aqueous solution as described herein above prior to drying. In any case, the particles are dried at about 100°C to about 600°C for about a second to about 2 hours to form magnesium stabilized catalyst particles, in accordance with the invention.

Catalyst compositions prepared according to the invention may be used in combination with other catalysts and/or optional additives conventionally used in catalytic cracking process, in particularly FCC processes, e.g. SOₓ reduction additives, NOₓ reduction additives, gasoline sulfur reduction additives, CO combustion promoters, additives for the production of light olefins, e.g. ZSM-5-containing additives and/or products, and the like.

Cracking catalyst compositions prepared according to the invention are useful in conventional FCC processes or other catalytic cracking processes where hydrocarbon feedstocks are cracked into lower molecular weight compounds. Somewhat briefly, the FCC process involves the cracking of heavy hydrocarbon feedstocks to lighter products by contact of the feedstock in a cyclic catalyst recirculation cracking process with a circulating fluidizable catalytic cracking catalyst inventory consisting of particles having a mean particle size from about 45 to about 200 *µ*m, preferably from about 55 µm to about 150 *µ*m. The catalytic cracking of these relatively high molecular weight hydrocarbon feedstocks results in the production of a hydrocarbon product of lower molecular weight. The significant steps in the cyclic FCC process are:
(i) the feed is catalytically cracked in a catalytic cracking zone, normally a riser cracking zone, operating at catalytic cracking conditions by contacting feed with a source of hot, regenerated cracking catalyst to produce an effluent comprising cracked products and spent catalyst containing coke and strippable hydrocarbons;
(ii) the effluent is discharged and separated, normally in one or more cyclones, into a vapor phase rich in cracked product and a solids rich phase comprising the spent catalyst;
(iii) the vapor phase is removed as product and fractionated in the FCC main column and its associated side columns to form gas and liquid cracking products including gasoline;
(iv) the spent catalyst is stripped, usually with steam, to remove occluded hydrocarbons from the catalyst, after which the stripped catalyst is regenerated in a catalyst regeneration zone to produce hot, regenerated catalyst, which is then recycled to the cracking zone for cracking further quantities of feed.

Typical FCC processes are conducted at reaction temperatures of about 480°C to about 700°C with catalyst regeneration temperatures of about 600°C to about 800°C. As it is well known in the art, the catalyst regeneration zone may consist of a single or multiple reactor vessels. The compositions prepared according to the invention may be used in FCC processing of any typical hydrocarbon feedstock. The amount of the composition used may vary depending on the specific FCC process. Typically, the amount of the catalyst composition used is at least 0.01 wt% of the total cracking catalyst inventory. When used as a blend with other FCC catalysts and/or additives, the catalyst compositions are preferably used in an amount ranging from about 15 wt% to about 85 wt% of the total cracking catalyst inventory.

Cracking catalyst compositions prepared according to the invention may be added to the circulating FCC catalyst inventory while the cracking process is underway or they may be present in the inventory at the start-up of the FCC operation. Alternatively, the catalyst particles may be added directly to the cracking zone, to the regeneration zone of the FCC cracking apparatus, or at any other suitable point in the FCC process.

The cracking catalyst compositions prepared according to the invention may be used alone or in combination with other conventional FCC catalysts which include, for example, zeolite based catalysts with a faujasite cracking component as described in the seminal review by Venuto and Habib, Fluid Catalytic Cracking with Zeolite Catalysts, Marcel Dekker, New York 1979, ISBN 0-8247-6870-1 as well as in numerous other sources such as Sadeghbeigi, Fluid Catalytic Cracking Handbook, Gulf Publ. Co. Houston, 1995, ISBN 0-88415-290-1. Typically, the FCC catalysts consist of a binder, usually silica, alumina, or silica alumina, a Y type zeolite acid site active component, one or more matrix aluminas and/or silica aluminas, and clays, such as kaolin clay. The Y zeolite may be present in one or more forms and may have been ultra stabilized and/or treated with stabilizing cations such as any of the rare earths. The FCC catalyst may comprise a phosphorous stabilized zeolite having catalytic cracking activity, e.g. phosphorous stabilized Y type zeolite.

Catalyst compositions prepared in accordance with the invention may be used to crack any typical hydrocarbon feedstocks, including but not limited to, hydrotreated vacuum gas oils and non-hydrotreated vacuum gas oils. Cracking catalyst compositions prepared according to the invention are useful for cracking hydrocarbon feedstocks containing heavy resid petroleum feeds with typically higher boiling point distribution and higher Conradson carbon content as compared to typical gas oils.

Compositions prepared according to of- the invention offer the advantages of immediate cost savings in the preparation and use of FCC catalysts, as well as increased catalytic activity and improved selectivity for coke and hydrogen during a FCC process. Catalysts prepared according to the invention eliminate the need for costly rare earth components to achieve a catalyst performance comparable to rare earth containing FCC catalyst compositions.

To further illustrate the present invention and the advantages thereof, the following specific examples are given. The examples are given as specific illustrations of the claimed invention. It should be understood, however, that the invention is not limited to the specific details set forth in the examples.

All parts and percentages in the examples as well as the remainder of the specification that refers to solid compositions or concentrations are by weight unless otherwise specified. However, all parts and percentages in the examples as well as the remainder of the specification referring to gas compositions are molar or by volume unless otherwise specified.

Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited.

### EXAMPLES

### Example 1: Ultra Low Na₂O Catalyst with 1.6% MgO

Catalyst A was prepared with USY zeolite containing 0.9 wt% Na₂O. A slurry containing 25% USY zeolite (0.9% Na₂O), 20% colloidal silica (Bindzil), 35% acid peptized alumina and 20% clay was milled in a Drais mill and then spray dried in a Bowen spray dryer. The spray dried catalyst was lab muffle calcined for 40 minutes at 400°C. The calcined catalyst was washed to remove Na₂O. After the washing step, the filter cake was impregnated with enough MgSO₄ solution to result in 1.6 wt% MgO on the catalyst. The resulting catalyst was labeled Catalyst A. Catalyst A contained 0.15 wt% Na₂O which corresponds to a 0.60 wt% Na₂O on a zeolite basis. Properties of the catalyst were as shown in Table 1 below.

### Comparative Example 1: Low Na₂O Catalyst with 1.6% MgO

Comparative Catalyst 1 was prepared with a USY zeolite containing 2.7 wt% Na₂O. A slurry containing 25% USY zeolite (2.7% Na₂O), 20% colloidal silica (Bindzil), 35% acid peptized alumina and 20% clay was milled in a Drais mill and then spray-dried in a Bowen spray dryer. The spray dried catalyst was lab muffle calcined for 40 minutes at 400°C. The calcined catalyst was washed to remove Na₂O. After the washing step, the filter cake was impregnated with enough MgSO₄ solution to result in 1.6 wt% MgO on the catalyst. The resulting catalyst was labeled Comparative Catalyst 1. Comparative Catalyst 1 contained 0.30 wt% Na₂O which corresponds to 1.2 wt% Na₂O on a zeolite basis. Properties of the catalyst are shown in Table 1 below.

**Table 1**

| **Chemical and Physical Properties of Fresh and Deactivated Catalyst** | | |
|---|---|---|
| **Description:** | **Comparative Catalyst 1** | **Catalyst A** |
| **Al₂O₃, %:** | 46.60 | 45.40 |
| **Na₂O, %:** | 0.30 | 0.15 |
| **MgO, %:** | 1.50 | 1.70 |
| **RE₂O₃, %:** | 0.10 | 0.03 |

| **Fresh Properties:** | | |
|---|---|---|
| **Surface Area, m²/g:** | 299 | 309 |
| **ZSA, m²/g:** | 143 | 158 |
| **MSA, m²/g:** | 156 | 151 |

| **After CPS with Metals:** | | |
|---|---|---|
| **Ni, ppm** | 2175 | 2150 |
| **V, ppm** | 3440 | 3340 |
| **CS (ASR), A:** | 24.27 | 24.29 |
| **ZSA** | 67 | 87 |
| **MSA** | 102 | 106 |
| **ZSA Retention, %** | 46.9% | 55.1 |

### Example 2: DCR Evaluation of Catalyst A

Catalyst A and Comparative Catalyst 1 were deactivated using a cyclic propylene steam (CPS) protocol (See Lori T. Boock, Thomas F. Petti, and John A. Rudesill, ACS Symposium Series, 634, 1996, 171-183). The catalysts were deactivated with 2000 ppm Ni/3000 ppm V. The physical and chemical properties of the Catalyst A along with Comparative Example 1 after the deactivation are listed in Table 1 above.

Catalyst A exhibited significantly better zeolite surface area (ZSA) retention after deactivation as compared to Comparative Catalyst 1. The deactivated catalysts were then run through a Davison Circulating Riser (DCR) unit with a resid feed. The reactor temperature was 527°C. The DCR test results were as recorded in Table 2 below.

**Table 2**

| **Interpolated DCR Yields of Ultra Low Sodium Mg Containing Catalyst B after CPS** with **2000 ppm Ni/3000 ppmV** | | |
|---|---|---|
| **Conversion** | **70** | |
| | **Comparative Catalyst 1** | **Catalyst A** |
| **Catalyst-to-Oil** | 8.68 | 6.33 |
| **H2 Yield wt%** | 0.15 | 0.14 |
| **C1 + C2's wt%** | 2.69 | 2.69 |
| **Total C3 wt%** | 5.02 | 5.07 |
| **Total C4 wt%** | 9.15 | 9.20 |
| **Gasoline wt%** | 47.44 | 47.89 |
| **LCO wt%** | 21.60 | 21.67 |
| **Bottoms wt%** | 8.40 | 8.33 |
| **Coke wt%** | 5.47 | 4.82 |

The data in Table 2 clearly show that Catalyst A made with ultra low sodium USY zeolite exhibited significantly higher activity and improved coke selectivity, as compared to Comparative Catalyst 1. The Catalyst-to-Oil was lowered by 2.35 and the coke yield was lowered by 0.65 wt% for Catalyst A as compared to Comparative Catalyst 1.

### Example 3: Ultra Low Na₂O Catalyst with 0.8% MgO

Catalyst B was prepared with a USY zeolite containing 0.9% Na₂O. A slurry containing 25% USY zeolite, 15% boehmite alumina, 18% aluminum chlorohydrol and 42% clay was milled in a Drais mill and then spray dried in a Bowen spray dryer. The spray dried catalyst was lab muffle calcined for 40 minutes at 400°C. The calcined catalyst was washed to remove Na₂O. After the washing step, the filter cake was impregnated with enough MgSO₄ solution to result in 0.8 wt% MgO on the catalyst. The resulting catalyst was labeled Catalyst B. Catalyst B contained 0.14 wt% Na₂O which corresponds to 0.56 wt% Na₂O on a zeolite basis. Properties of the catalyst were as shown in Table 3 below.

### Comparative Example 2: Catalyst with RE₂O₃

Comparative Catalyst 2 was prepared with a USY zeolite containing 0.9% Na₂O. A slurry containing 25% USY zeolite, 15% boehmite alumina, 18% aluminum chlorohydrol, 2% rare earth from a rare earth salt and 40% clay was milled in a Drais mill and then spray dried in a Bowen spray dryer. The spray dried catalyst was lab muffle calcined for 40 minutes at 400°C. The calcined catalyst was washed and labeled Comparative Catalyst 2. Comparative Catalyst 2 contained 0.22 wt% Na₂O which corresponds to 0.88 wt% Na₂O on a zeolite basis. Properties of the catalyst were as shown in Table 3 below.

**Table 3**

| **Chemical and Physical Properties of Fresh and Deactivated Catalyst B** | | |
|---|---|---|
| **Description:** | **Comparative Catalyst 2** | **Catalyst B** |
| **Al₂O₃, %:** | 53.9 | 54.8 |
| **Na₂O, %:** | 0.22 | 0.14 |
| **MgO, %:** | 0.05 | 0.78 |
| **RE₂O₃, %:** | 1.73 | 0.22 |

| **Fresh Properties:** | | |
|---|---|---|
| **Surface Area, m²/g:** | 290 | 259 |
| **ZSA, m²/g:** | 181 | 176 |
| **MSA, m²/g:** | 109 | 83 |

| **After CPS with Metals:** | | |
|---|---|---|
| **Ni, ppm** | 1046 | 1085 |
| **V, ppm** | 2170 | 2290 |
| **CS (ASR), A:** | 24.29 | 24.28 |
| **ZSA** | 81 | 82 |
| **MSA** | 76 | 62 |

### Example 4: DCR Evaluation of Catalyst B

Catalyst B and Comparative Catalyst 2 were deactivated using a cyclic propylene steam (CPS) protocol (See Lori T. Boock, Thomas F. Petti, and John A. Rudesill, ACS Symposium Series, 634, 1996, 171-183). The catalysts were deactivated with 1000 ppm Ni/2000 ppm V. The physical and chemical properties of the Catalyst B and Comparative Catalyst 2, after the deactivation, are showed in Table 3 above.

The deactivated catalysts were then run through a Davison Circulating Riser (DCR) unit with a resid feed having properties as listed below:

| | |
|---|---|
| **API Gravity @60 ^{ø}F** | **25.07** |
| **Sulfur, wt.%** | **0.403** |
| **Total Nitrogen, wt.%** | **0.11** |
| **Basic Nitrogen, wt.%** | **0.037** |
| **Conradson Carbon, wt.%** | **2.67** |
| **Ni, ppm** | **1.7** |
| **V, ppm** | **3.5** |
| **Fe, ppm** | **8.9** |
| **Na, ppm** | **1.8** |
| **Simulated Distillation, vol.%, °F** | |
| **IBP** | **306** |
| **5** | **360** |
| **20** | **619** |
| **40** | **736** |
| **60** | **840** |
| **80** | **983** |
| **FBP** | **1340** |

The reactor temperature was 527°C. Results of the DCR evaluation were as recorded in Table 4 below.

**Table 4**

| **Interpolated DCR Yields of Ultra Low Sodium Mg Containing Catalyst B after CPS with 1000 ppmNi/2000 ppmV** | | |
|---|---|---|
| **Conversion** | **71** | |
| | **Comparative Catalyst 2** | **Catalyst B** |
| **Catalyst-to-Oil** | 8.83 | 8.05 |
| **H2 Yield wt%** | 0.09 | 0.07 |
| **C1 + C2's wt%** | 2.93 | 2.59 |
| **Total C3 wt%** | 5.46 | 5.54 |
| **Total C4 wt%** | 9.86 | 9.94 |
| **Gasoline wt%** | 47.94 | 48.70 |
| **LCO wt%** | 21.34 | 21.15 |
| **Bottoms wt%** | 7.57 | 7.82 |
| **Coke wt%** | 4.33 | 4.06 |

The data clearly showed that Catalyst B which was made with ultra low sodium USY zeolite and stabilized with MgO, exhibited higher activity and improved coke selectivity as compared to Comparative Catalyst 2 which was stabilized with RE₂O₃. The Catalyst-to-Oil was lowered by 0.78 wt% and the coke yield was lowered by 0.27 wt% for Catalyst B as compared to that obtained for Comparative Catalyst 2.

### Comparative Example 3: Ultra Low Na₂O Catalyst with RE2O3

Comparative Catalyst 3 was prepared with a USY zeolite containing 0.9 wt% Na₂O. A slurry containing 25% USY zeolite (0.9% Na₂O), 5% colloidal silica (Bindzil), 35% acid peptized alumina, 2.0% RE2O3 from a rare earth salt and 33% clay was milled in a Drais mill and then spray dried in a Bowen spray dryer. The spray dried catalyst was lab muffle calcined for 40 minutes at 400°C. The calcined catalyst was washed to remove Na₂O to obtain a Comparative Catalyst 3. Comparative Catalyst 3 contained 0.10 wt% Na₂O which corresponds to 0.4 wt% Na₂O on a zeolite basis. Properties of the catalyst were as shown in Table 5 below.

### Comparative Example 4: Low Na₂O Catalyst with RE2O3

Comparative Catalyst 4 was prepared with a USY zeolite containing 2.8% Na₂O. A slurry containing 25% USY zeolite (2.7% Na₂O), 5% colloidal silica (Bindzil), 35% acid peptized alumina, 2.0% **RE₂O₃** from a rare earth salt and 33% clay was milled in a Drais mill and then spray dried in a Bowen spray dryer. The spray dried catalyst was lab muffle calcined for 40 minutes at 400°C. The calcined catalyst was washed to remove Na₂O to obtain Comparative Catalyst 4. Comparative Catalyst 4 contained 0.24 wt % Na₂O which corresponds to 1.0 wt% Na₂O on a zeolite basis. Properties of the catalyst were as shown in Table 5 below.

**Table 5**

| **Chemical and Physical Properties of Fresh and Deactivated Catalyst A** | | |
|---|---|---|
| **Description:** | **Comparative Catalyst 3** | **Comparative Catalyst 4** |
| **Al₂O₃, %:** | 50.7 | 51.8 |
| **Na₂O, %:** | 0.10 | 0.24 |
| **RE₂O₃, %:** | 2.18 | 2.13 |

| **Fresh Properties:** | | |
|---|---|---|
| **Surface Area, m²/g:** | 299 | 285 |
| **ZSA, m²/g:** | 178 | 161 |
| **MSA, m²/g:** | 114 | 124 |

| **After CPS with Metals:** | | |
|---|---|---|
| **Ni, ppm** | 4479 | 4709 |
| **V, ppm** | 5740 | 5880 |
| **CS (ASR), A:** | 24.27 | 24.27 |
| **ZSA** | 82 | 70 |
| **MSA** | 88 | 80 |
| **ZSA Retention, %** | 46.1% | 43.5 |

### Comparative Example 5: Comparison of Ultra Low Sodium and Low Sodium in MgO Catalyst and Rare Earth Catalyst

Comparative Catalyst 3 and Comparative Catalyst 4 were deactivated using a cyclic propylene steam (CPS) protocol (See Lori T. Boock, Thomas F. Petti, and John A. Rudesill, ACS Symposium Series, 634, 1996, 171-183). The catalysts were deactivated with 4600 ppm Ni/5800 ppm V. Deactivated properties of the catalyst are shown in Table 5. The deactivated catalysts were then run through an ACE testing unit with a resid feed having properties as described herein above. The reactor temperature was 527°C.

The results of the ACE testing were compared to the results obtained from Example 2 to determine the effect of Na₂O level on RE₂O₃ containing catalysts versus MgO containing catalysts. Comparison results of the improvement of the zeolite surface area (ZSA) retention, activity and coke yield of ultra low sodium USY zeolite for both rare earth and MgO catalysts were as summarized in Table 6 below.

**Table 6**

| **Improvements of Ultra Low Sodium USY Mg and Rare Earth Catalysts Versus Low Sodium USY Mg and Rare Earth Catalysts** | | |
|---|---|---|
| **Improvements** | **Ultra Low Sodium USY vs. Low Sodium USY (Rare Earth Catalysts)** | **Ultra Low Sodium USY vs. Low Sodium USY (Mg Catalysts)** |
| **% ZSA Retention** | 2.7 | 8.3 |
| **Catalytic Activity (# lower Cat-to-Oil)** | 0.6 | 2.4 |
| **Coke Production (# lower Coke)** | 0.0 | 0.7 |

The data show that Comparative Catalyst 3 made with ultra low sodium USY and rare earth had only a slightly better zeolite surface area (ZSA) retention as compared to Comparative Catalyst 4 made with low sodium USY zeolite and rare earth, indicating a small benefit for ultra low sodium USY zeolite in a rare earth containing catalyst. However, Catalyst A made with ultra low sodium USY and Mg had a significantly higher ZSA retention improvement as compared to Comparative Catalyst 1 which contained low sodium and Mg, indicating marked improvement in zeolite surface area retention when an ultra low sodium USY zeolite Mg Catalyst is used.

The data also show that using ultra low sodium USY and rare earth containing catalyst (Comparative Catalyst 3) exhibited only a slightly higher activity and equal coke as compared to using a low sodium USY zeolite and rare earth containing catalyst (Comparative Catalyst 4). These results clearly demonstrate that the activity boost and the coke selectivity improvement obtained from ultra low sodium USY zeolite are significantly higher in magnesium containing catalysts (see Example 2) than rare earth containing catalysts.

## Claims

1. A method of forming an ultra low soda, rare earth free fluid catalytic cracking catalyst containing magnesium, wherein the cracking catalyst comprises less than 0.3 wt% of rare earth or rare earth metal, measured as the oxide, based on the total weight of the composition, the rare earth or rare-earth metal being a metal of the lanthanide series or yttrium, said method comprising
a. forming an aqueous slurry comprising at least one fluid catalytically cracking active zeolite having a Na₂O content sufficient to provide less than 0.7 wt% Na₂O, on a zeolite basis, in the final catalyst composition, wherein the zeolite is a faujasite zeolite, an inorganic binder selected from silica sol, peptized alumina, and combinations thereof, clay, and optionally at least one matrix material selected from silica, alumina, silica-alumina, zirconia, titania, and combinations thereof;
b. optionally, milling the slurry;
c. spray drying the slurry to form catalyst particles
d. optionally, calcining the catalyst particles at a temperature and for a time sufficient to remove volatiles;
e. optionally, washing the catalyst particles;
f. contacting the catalyst particles with an aqueous solution comprising at least one soluble magnesium salt in an amount sufficient to provide from 0.5 to 3.0 wt% magnesium oxide in the final catalyst composition; and
g. removing and drying the particulate catalyst composition to provide a final catalyst composition having less than 0.7 wt% Na₂O, on a zeolite basis, and from 0.5 to 3.0 wt% magnesium oxide, based on the total weight of the catalyst composition.

2. The method of claim 1 wherein the faujasite zeolite is a Y-type zeolite.

3. The method of claim 1 or 2 wherein the Na₂O content is less than 0.5 wt% Na₂O, on a zeolite basis, in the final catalyst composition.

4. The method of any one of claims 1 to 3 wherein the amount of faujasite zeolite present in the catalyst ranges from 10 wt% to 75 wt% of the total catalyst composition.

5. The method of claim 4 wherein the amount of fauj asite zeolite present in the catalyst ranges from 12 wt% to 55 wt% of the total catalyst composition.

6. The method of any one of the preceding claims wherein the binder is an acid or base peptized alumina.

7. The method of any one of the preceding claims wherein the amount of binder present in the catalyst ranges from 10 wt% to 60 wt% of the catalyst composition.

8. The method of any one of the preceding claims wherein clay is present in the composition in an amount ranging from 5 wt% to 65 wt% of the total catalyst composition.

9. The method of any one of the preceding claims wherein the matrix material is present in the composition in an amount ranging from 1 wt% to 70 wt% of the total catalyst composition.

10. The method of any one of the preceding claims, wherein the faujasite zeolite is a clay derived zeolite produced by treating clay with a silica source under alkaline conditions.

## Patentansprüche

1. Verfahren zum Ausbilden eines ultra-niedrigen Natriumcarbonat-, Seltene Erde-freien flüssigen katalytischen Crackkatalysators, der Magnesium enthält, wobei der Crackkatalysator weniger als 0,3 Gew.-% Seltene Erde oder Seltenerdmetall, gemessen als das Oxid, bezogen auf das Gesamtgewicht der Zusammensetzung, umfasst,
wobei die Seltene Erde oder das Seltenerdmetall ein Metall der Lanthanidenreihe oder Yttrium ist,
wobei das Verfahren umfasst:
a. Ausbilden einer wässrigen Aufschlämmung, umfassend wenigstens ein flüssiges katalytisch crackendes aktives Zeolith mit einem Na₂O Gehalt, der ausreicht, um weniger als 0,7 Gew.-% Na₂O auf einer Zeolithbasis in der endgültigen Katalysatorzusammensetzung bereitzustellen, wobei der Zeolith ein Faujasitzeolith ist, ein anorganisches Bindemittel, ausgewählt aus Kieselsol, peptisiertem Aluminiumoxid und Kombinationen davon, Ton und optional wenigstens ein Matrixmaterial, ausgewählt aus Siliciumdioxid, Aluminiumoxid, Siliciumdioxid-Aluminiumoxid, Zirconiumdioxid, Titandioxid und Kombinationen davon;
b. optional, Mahlen der Aufschlämmung;
c. Sprühtrocknen der Aufschlämmung zum Ausbilden von Katalysatorteilchen,
d. optional, Kalzinieren der Katalysatorteilchen bei einer Temperatur und für eine Zeit, die ausreichen, um flüchtige Bestandteile zu entfernen;
e. optional, Waschen der Katalysatorteilchen;
f. Inberührungbringen der Katalysatorteilchen mit einer wässrigen Lösung, die wenigstens ein lösliches Magnesiumsalz in einer Menge umfasst, die ausreicht, um 0,5 bis 3,0 Gew.-% Magnesiumoxid in der endgültigen Katalysatorzusammensetzung bereitzustellen; und
g. Entfernen und Trocknen der teilchenförmigen Katalysatorzusammensetzung, um eine endgültige Katalysatorzusammensetzung bereitzustellen, die weniger als 0,7 Gew.-% Na₂O auf einer Zeolithbasis und von 0,5 bis 3,0 Gew.-% Magnesiumoxid, bezogen auf das Gesamtgewicht der Katalysatorzusammensetzung, aufweist.

2. Verfahren nach Anspruch 1, wobei der Faujasitzeolith ein Zeolith der Y-Art ist.

3. Verfahren nach Anspruch 1 oder 2, wobei der Na₂O-Gehalt in der endgültigen Katalysatorzusammensetzung weniger als 0,5 Gew.-% Na₂O auf einer Zeolithbasis beträgt.

4. Verfahren nach einem der Ansprüche 1 bis 3, wobei die Menge an Faujasitzeolith, die in dem Katalysator vorhanden ist, im Bereich von 10 Gew.-% bis 75 Gew.-% der gesamten Katalysatorzusammensetzung liegt.

5. Verfahren nach Anspruch 4, wobei die Menge des Faujasitzeoliths, die in dem Katalysator vorhanden ist, im Bereich von 12 Gew.-% bis 55 Gew.-% der gesamten Katalysatorzusammensetzung liegt.

6. Verfahren nach einem der vorhergehenden Ansprüche, wobei das Bindemittel ein säure- oder basenpeptisiertes Aluminiumoxid ist.

7. Verfahren nach einem der vorhergehenden Ansprüche, wobei die Menge des Bindemittels, das in dem Katalysator vorhanden ist, im Bereich von 10 Gew.-% bis 60 Gew.% der Katalysatorzusammensetzung liegt.

8. Verfahren nach einem der vorhergehenden Ansprüche, wobei Ton in der Zusammensetzung in einer Menge im Bereich von 5 Gew.-% bis 65 Gew.-% der gesamten Katalysatorzusammensetzung vorhanden ist.

9. Verfahren nach einem der vorhergehenden Ansprüche, wobei das Matrixmaterial in der Zusammensetzung in einer Menge im Bereich von 1 Gew.-% bis 70 Gew.-% der gesamten Katalysatorzusammensetzung vorhanden ist.

10. Verfahren nach einem der vorhergehenden Ansprüche, wobei der Faujasitzeolith ein aus Ton gewonnener Zeolith ist, der durch Behandlung von Ton mit einer Siliciumdioxidquelle unter alkalischen Bedingungen hergestellt wird.

## Revendications

1. Procédé de formation d'un catalyseur de craquage catalytique fluide à très faible teneur en soude et sans terre rare contenant du magnésium, dans lequel le catalyseur de craquage comprend moins de 0,3 % en poids de terre rare ou de métal de terre rare, mesuré en tant qu'oxyde, sur la base du poids total de la composition, la terre rare ou le métal de terre rare étant un métal de la série des lanthanides ou l'yttrium, ledit procédé comprenant
a. la formation d'une bouillie aqueuse comprenant au moins une zéolite active de craquage catalytique fluide ayant une teneur en Na₂O suffisante pour fournir moins de 0,7 % en poids de Na₂O, sur une base de zéolite, dans la composition de catalyseur finale, dans lequel la zéolite est une zéolite faujasite, un liant inorganique sélectionné parmi le sol de silice, l'alumine peptisée et leurs combinaisons, l'argile et éventuellement au moins un matériau de matrice choisi parmi la silice, l'alumine, la silice-alumine, la zircone, l'oxyde de titane et leurs combinaisons ;
b. éventuellement, le broyage de la bouillie ;
c. le séchage par pulvérisation de la bouillie pour former des particules de catalyseur
d. éventuellement, la calcination des particules de catalyseur à une température et pendant une durée suffisantes pour éliminer les matières volatiles ;
e. éventuellement, le lavage des particules de catalyseur ;
f. la mise en contact des particules de catalyseur avec une solution aqueuse comprenant au moins un sel de magnésium soluble en une quantité suffisante pour fournir de 0,5 à 3,0 % en poids d'oxyde de magnésium dans la composition de catalyseur finale ; et
g. le retrait et le séchage de la composition de catalyseur particulaire pour fournir une composition de catalyseur finale ayant moins de 0,7 % en poids de Na₂O, sur une base de zéolite, et de 0,5 à 3,0 % en poids d'oxyde de magnésium, sur la base du poids total de la composition de catalyseur.

2. Procédé selon la revendication 1 dans lequel la zéolithe faujasite est une zéolithe de type Y.

3. Procédé selon la revendication 1 ou 2, dans lequel la teneur en Na₂O est inférieure à 0,5 % en poids de Na₂O, sur une base de zéolithe, dans la composition de catalyseur finale.

4. Procédé selon l'une quelconque des revendications 1 à 3, dans lequel la quantité de zéolite faujasite présente dans le catalyseur est comprise entre 10 % en poids et 75 % en poids de la composition de catalyseur totale.

5. Procédé selon la revendication 4, dans lequel la quantité de zéolithe faujasite présente dans le catalyseur est comprise entre 12 % en poids et 55 % en poids de la composition de catalyseur totale.

6. Procédé selon l'une quelconque des revendications précédentes dans lequel le liant est une alumine peptisée acide ou basique.

7. Procédé selon l'une quelconque des revendications précédentes, dans lequel la quantité de liant présent dans le catalyseur est comprise entre 10 % en poids et 60 % en poids de la composition de catalyseur.

8. Procédé selon l'une quelconque des revendications précédentes, dans lequel l'argile est présente dans la composition en une quantité allant de 5 % en poids à 65 % en poids de la composition de catalyseur totale.

9. Procédé selon l'une quelconque des revendications précédentes, dans lequel le matériau de matrice est présent dans la composition en une quantité allant de 1 % en poids à 70 % en poids de la composition de catalyseur totale.

10. Procédé selon l'une quelconque des revendications précédentes, dans lequel la zéolite faujasite est une zéolite dérivée d'argile produite en traitant l'argile avec une source de silice dans des conditions alcalines.
